# DEMANDE DE BREVET EUROPEEN

(11) **EP 1 921 548 A1**
(43) Date de publication de la demande: **14.05.2008**
(21) Numéro de dépôt: 07119606.7
(22) Date de dépôt: 30.10.2007
(51) Int. Cl.: G06F 17/30

(54) **Procédé et système de communication pour fournir au moins une réponse à une requête d'un utilisateur**

(30) Priorité: 07.11.2006 FR 0654755
(71) Demandeur: France Télécom, 75015 Paris (FR)
(72) Inventeur: Delalonde, Charles, 38700, La Tronche (FR); Chevrier, Bertrand, 38240, Meylan (FR); Soulier, Eddie, 10010, Troyes Cedex (FR)
(74) Mandataire: Joly, Jean-Jacques

(57) **Abrégé**

L'invention concerne un procédé et un système de communication (1) pour un ensemble d'utilisateurs, ledit système étant conçu pour fournir au moins une réponse à une requête d'un utilisateur demandeur (5a), le système comportant :
-des moyens de recherche (9) pour générer une liste d'utilisateurs (5b) en sélectionnant dans ledit ensemble d'utilisateurs (5b, 5c), en fonction de profils desdits utilisateurs, des utilisateurs susceptibles de répondre à ladite requête, lesdits profils étant identifiés dans ladite requête,
-des moyens de communication (11) pour permettre un échange entre lesdits utilisateurs de ladite liste (5b) au sujet de ladite requête, et
-des moyens d'émission (13) pour envoyer à l'utilisateur demandeur ladite au moins une réponse issue dudit échange.

## Description

### Domaine technique de l'invention

L'invention se rapporte au domaine de moteurs de recherche et plus particulièrement, au domaine de gestion et de fourniture de réponses à une requête d'un demandeur.

### Arrière-plan de l'invention

De manière générale, les moteurs de recherches fournissent des documents ou des liens sur des sites internent en se basant sur des recherches basées sur une phrase ou un ensemble de mots clefs, par liens sémantiques ou par associations. Eventuellement le résultat peut être évalué par d'autres utilisateurs du système sous une forme chiffrée (scoring). Par ailleurs, il existe des outils qui permettent d'échanger et de capitaliser des connaissances.

Plus particulièrement, il est connu un site web « Yahoo! Answers » qui propose un environnement pour poser une question, évaluer la qualité des réponses et identifier la meilleure réponse obtenue. L'inconvénient principal de cette approche réside dans le fait que toute personne qualifiée ou non qualifiée peut répondre à la question posée et par conséquent la qualité du ou des réponses n'est pas garantie.

Un autre site web « Google Answers » propose également un environnement où un utilisateur est mis en relation avec un expert prédéfini pour répondre à la question de l'utilisateur. Cependant, la réponse de l'expert peut être incomplète ou même très approximative.

Un autre site web « Yoono » se positionne sur une fonction de "filtrage collaboratif" ou partage de signets (bookmarks), c'est-à-dire le partage de raccourcis vers une URL. Plus particulièrement, le site Yoono comprend un lien pour "trouver des experts". Ce lien fournit une série d'individus, jugés experts d'un domaine, en fonction des signets qu'ils partagent. Yoono propose à chacun de regarder les signets que les experts ont bien voulu partager, permettant une navigation de "mots clés en mots clés". Ainsi, l'expertise est très limitée et se construit uniquement à partir d'une série de signets qu'un individu partage.

### Objet et résumé de l'invention

L'invention vise un système de communication pour un ensemble d'utilisateurs, ledit système étant conçu pour fournir au moins une réponse à une requête d'un utilisateur demandeur, comportant :
- des moyens de recherche pour générer une liste d'utilisateurs en sélectionnant dans ledit ensemble d'utilisateurs, en fonction de profils desdits utilisateurs, des utilisateurs susceptibles de répondre à ladite requête, lesdits profils étant identifiés dans ladite requête,
- des moyens de communication pour permettre un échange entre lesdits utilisateurs de ladite liste au sujet de ladite requête, et
- des moyens d'émission pour envoyer à l'utilisateur demandeur ladite au moins une réponse issue dudit échange.

Ce système permet une génération automatique d'une liste d'utilisateurs, répondeurs potentiels, et une coopération entre ces répondeurs potentiels afin d'apporter une ou plusieurs réponses jugées pertinentes par l'ensemble de ces répondeurs. Ainsi, le demandeur peut ensuite choisir la réponse qui lui semble la plus pertinente.

Avantageusement le système comporte :
- des moyens pour permettre auxdits utilisateurs de ladite liste d'utilisateurs de sélectionner une meilleur réponse parmi ladite au moins une réponse, et
- une base de donnée pour enregistrer ladite meilleure réponse.

Ainsi, la connaissance peut être capitalisée en permettant par exemple aux utilisateurs de ladite liste de voter pour une meilleure réponse afin que cette réponse puisse être éventuellement envoyée à un autre utilisateur demandeur posant une question similaire.

Le système peut comporter des moyens d'édition pour permettre audit utilisateur demandeur de supprimer une partie des utilisateurs de ladite liste d'utilisateurs généré par lesdits moyens de recherche.

Ainsi, le demandeur est libre de sélectionner des utilisateurs répondeurs particuliers parmi ceux proposé automatiquement par le système de communication selon par exemple, des critères géographiques, de disponibilité ou d'évaluation du répondeur.

Ledit moyen de sélection est conçu pour permettre aussi audit utilisateur demandeur de rajouter d'autres utilisateurs à ladite liste d'utilisateurs.

Ainsi, le demandeur peut aussi rajouter de manière arbitraire d'autres utilisateurs répondeurs qu'il a lui-même identifiés en plus de ceux qu'il a choisis parmi la liste de répondeurs proposée par le système de communication.

Lesdits moyens de communication peuvent comporter:
- des moyens de création pour créer un espace d'échange spécifique à ladite requête,
- des moyens de notification pour notifier auxdits utilisateurs de ladite liste d'utilisateurs, un message associé à ladite requête et
- des moyens pour fournir aux utilisateurs de ladite liste d'utilisateurs un accès audit espace d'échange.

Ainsi, le système permet de créer un forum ayant pour titre le message ou la question posé par le demandeur et qui est accessible aux utilisateurs de ladite liste d'utilisateurs grâce par exemple, à un lien rajouté à la fin du message permettant à chaque utilisateur répondeur d'accéder au forum au moyen d'un simple click.

Le système comporte des moyens de réception pour recevoir en provenance d'un terminal de l'utilisateur demandeur de ladite requête, ledit message associé à ladite requête, et/ou des paramètres relatifs à un mode de diffusion dudit message.

Ainsi, l'utilisateur demandeur peut rédiger un message qui explicite sa requête en précisant éventuellement le caractère d'urgence de sa requête. De même, l'accès à l'espace de discussion peut être limité en spécifiant que la discussion doit rester confidentielle.

Avantageusement, le système comporte des moyens de constitution de profils pour constituer le profil d'un utilisateur par un ensemble de données de profil provenant d'au moins une source de données parmi les sources suivantes : données collectées depuis un système d'information, données déclarées par ledit utilisateur, données issues d'une activité dudit utilisateur, données extraites des profils des membres d'un groupe d'utilisateur, données extraites des documents que ledit utilisateur partage avec d'autres utilisateurs, et données extraites des échanges que ledit utilisateur a réalisé avec d'autres utilisateurs.

Ceci permet de créer de manière automatique des profils à partir d'une pluralité de sources pour mieux identifier les utilisateurs afin de bien choisir les utilisateurs répondeurs potentiels à la requête. Ainsi, l'utilisateur répondeur peut être facilement identifié comme un utilisateur susceptible de répondre à toute question comportant des mots clefs correspondant au profil de cet utilisateur. De plus, on peut réaliser une mise en relation efficace et riche tout en permettant de joindre les utilisateurs répondeurs suivant des préférences de réception afin de ne pas importuner les utilisateurs du système.

Avantageusement, les moyens de constitution de profils comportent en outre :
des moyens de proposition pour proposer audit utilisateur lesdites données de profil extraites, et -des moyens de validation pour permettre audit utilisateur de valider lesdites données de profil et/ou de pondérer lesdites données de profil.

Ainsi, un utilisateur a l'occasion d'agir sur son profil pour mieux l'adapter afin de faciliter son identification comme un utilisateur répondeur susceptible de répondre à toute question comportant par exemple des mots clefs correspondant à des données de son profil.

Selon une particularité de l'invention, le système comporte en outre :
- des moyens de collecte pour collecter des coefficients attribués à des filtres caractérisant chaque utilisateur, le coefficient attribué à au moins un desdits filtres étant dépendant de la requête,
- des moyens d'organisation pour organiser les utilisateurs selon des classes de pertinence en fonction des coefficients attribués auxdits filtres de chaque utilisateur, et
- des moyens de choix de répondeurs pertinents pour choisir la liste de répondeurs la plus adaptée pour répondre à ladite requête selon lesdites classes de pertinence.

Ainsi, on peut mettre en avant de manière simple et efficace les utilisateurs, répondeurs potentiels les plus pertinents parmi tous les utilisateurs en fonction de la requête.

De plus, le système peut comporter un moyen de recherche de documents pour rechercher au moins un document pertinent en réponse à ladite requête.

Avantageusement, le système comporte en outre un moyen de commutation pour permettre au demandeur de choisir entre rechercher des documents pertinents ou rechercher des utilisateurs susceptibles de répondre à sa requête.

Ainsi, le système comporte un outil collaboratif permettant à partir d'une problématique donnée de rechercher des documents pertinents et/ou d'échanger avec des personnes susceptibles de répondre à cette problématique.

L'invention vise également un procédé de communication pour un ensemble d'utilisateurs, ledit procédé étant conçu pour fournir au moins une réponse à une requête d'un utilisateur demandeur, ledit procédé comportant les étapes suivantes :
- génération d'une liste d'utilisateurs en sélectionnant dans ledit ensemble d'utilisateurs, en fonction de profils desdits utilisateurs, des utilisateurs susceptibles de répondre à ladite requête, lesdits profils étant identifiés dans ladite requête,
- communication entre lesdits utilisateurs de ladite liste pour permettre un échange entre lesdits utilisateurs de ladite liste au sujet de ladite requête, et
- envoie à l'utilisateur demandeur ladite au moins une réponse issue dudit échange.

Avantageusement, le procédé comporte en outre les étapes suivantes :
- sélection par lesdits utilisateurs de ladite liste d'une meilleure réponse parmi ladite au moins une réponse, et
- enregistrement de ladite meilleure réponse.

La communication entre lesdits utilisateurs de ladite liste comporte les étapes suivantes :
- création d'un espace d'échange spécifique à ladite requête, et
- notification auxdits répondeurs, d'un message associé à ladite requête et d'un accès audit espace d'échange.

Avantageusement, le procédé comporte une étape de constitution de profils pour constituer le profil d'un utilisateur par un ensemble de données de profil provenant d'au moins une source de données parmi les sources suivantes : données collectées depuis un système d'information, données déclarées par ledit utilisateur, données issues d'une activité dudit utilisateur, données extraites des profils des membres d'un groupe d'utilisateur, données extraites des documents que ledit utilisateur partage avec d'autres utilisateurs, et données extraites des échanges que ledit utilisateur a réalisé avec d'autres utilisateurs.

Avantageusement, le procédé comporte en outre les étapes suivantes :
- collecte des coefficients attribués à des filtres caractérisant chaque utilisateur, le coefficient attribué à au moins un desdits filtres étant dépendant de la requête,
- organisation des utilisateurs selon des classes de pertinence en fonction des coefficients attribués auxdits filtres de chaque utilisateur, et
- choix de la liste de répondeurs la plus adaptée pour répondre à ladite requête selon lesdites classes de pertinence.

L'invention vise aussi un programme d'ordinateur téléchargeable depuis un réseau de communication et/ou stocké sur un support lisible par ordinateur et/ou exécutable par un microprocesseur, comprenant des instructions de codes de programme pour l'exécution des étapes du procédé de communication selon au moins l'une des caractéristiques ci-dessus, lorsqu'il est exécuté sur un ordinateur.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 illustre schématiquement un exemple d'un système de communication, selon l'invention ;
- la figure 2 illustre schématiquement avec plus de détails le système selon la figure 1 ;
- la figure 3 illustre schématiquement un autre mode de réalisation de la figure 2 ;
- la figure 4 est un organigramme illustrant un exemple du procédé de communication, selon l'invention ; et
- la figure 5 est un diagramme illustrant un exemple particulier d'un enchaînement de tâches pour la recherche de connaissance, selon l'invention.

### Description détaillée de modes de réalisation

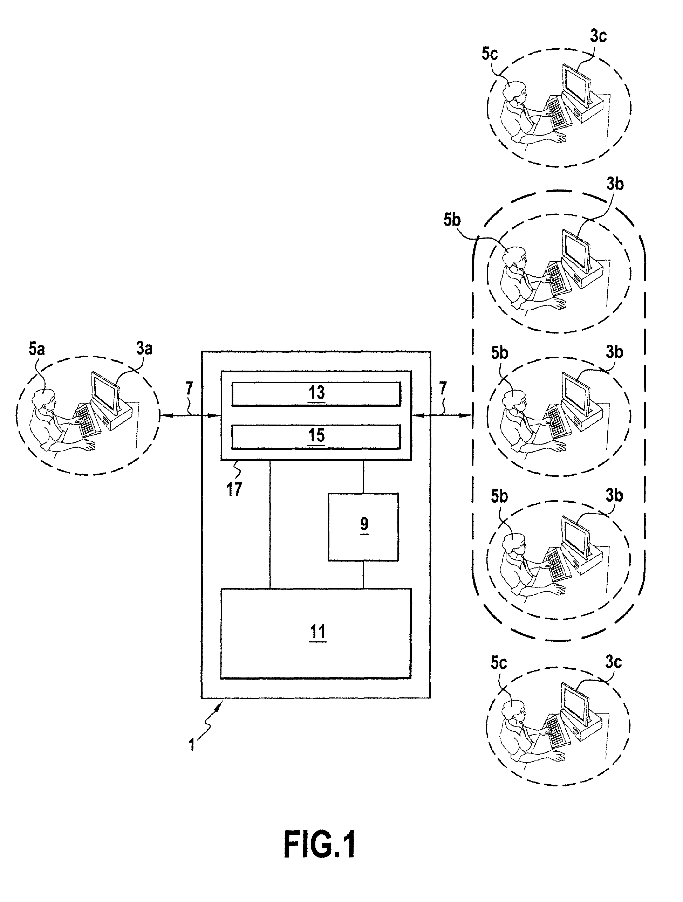

Conformément à l'invention, la figure 1 illustre un exemple schématique d'un système de communication 1 comprenant par exemple, un ou plusieurs serveurs d'un fournisseur de service de recherche, en relation avec une pluralité de terminaux 3a, 3b, 3c pilotés par des utilisateurs 5a, 5b, 5c. Les utilisateurs peuvent faire parties d'un ensemble d'utilisateurs inscrit auprès du fournisseur de service de recherche. Les terminaux 3a, 3b, 3c peuvent être des terminaux fixes, mobiles ou portables, de type ordinateur, téléphone, PDA, ou un tout autre dispositif de communication et peuvent être connectés au système de communication 1 au moyen d'un réseau ou de lignes de communication 7.

Ainsi, un utilisateur 5a peut se connecter au système de communication 1 via son terminal 3a pour envoyer une requête à destination de ce système de communication 1. En retour, le système de communication 1 fournit au demandeur 5a au moins une réponse à sa requête. On notera que cet utilisateur 5a qui a formulé la requête, on l'appellera par la suite utilisateur demandeur ou tout simplement demandeur 5a.

Le système de communication 1 comprend des moyens de recherche 9, des moyens de communication 11, et des moyens d'émission 13. D'une manière générale, les moyens d'émission 13 peuvent être compris ou confondus avec des moyens de réception 15 dans une interface de communication 17 qui permet de recevoir/émettre des données depuis/vers le demandeur 5a ou tout autre utilisateur.

Les moyens de recherche 9 génèrent d'abord une liste d'utilisateurs 5b, appelés aussi par la suite liste de destinataires ou utilisateurs répondeurs 5b, susceptibles de répondre à la requête du demandeur 5a. Ces utilisateurs répondeurs 5b sont recherchés ou sélectionnés parmi un ensemble d'utilisateurs déterminés 5b, 5c en fonction de profils de ces utilisateurs 5b, 5c. Ces profils peuvent par exemple être identifiés par des mots clés ou des codes numériques compris dans la requête. On notera que le terme « utilisateur répondeur » est à comprendre ici dans le sens d'un répondeur potentiel, c'est-à-dire un utilisateur qui peut répondre ou éventuellement qui ne peut pas répondre à la requête.

Ensuite, les moyens de communication 11 permettent un échange collaboratif entre les répondeurs (utilisateurs de la liste d'utilisateurs) 5b au sujet de la requête du demandeur 5a. Les moyens d'émission 13 peuvent alors envoyer à l'utilisateur demandeur 5a la ou les réponses issues de l'échange collaboratif entre ces utilisateurs répondeurs 5b.

On notera que la figure 1 est également une illustration des principales étapes du procédé de communication selon l'invention dans lequel, la ou les réponses sont issues d'un échange collaboratif entre les utilisateurs qui sont recherchés parmi un ensemble d'utilisateurs déterminés en fonction de profils de ces utilisateurs et susceptibles de répondre à la requête du demandeur.

L'échange collaboratif peut être réalisé d'emblée entre tous les utilisateurs répondeurs 5b de la liste d'utilisateurs générée automatiquement par les moyens de recherche 9.

En variante, le demandeur, après réception de la liste d'utilisateurs répondeurs 3b depuis le système de communication 1, peut modifier cette liste en supprimant et/ou en rajoutant d'autres utilisateurs.

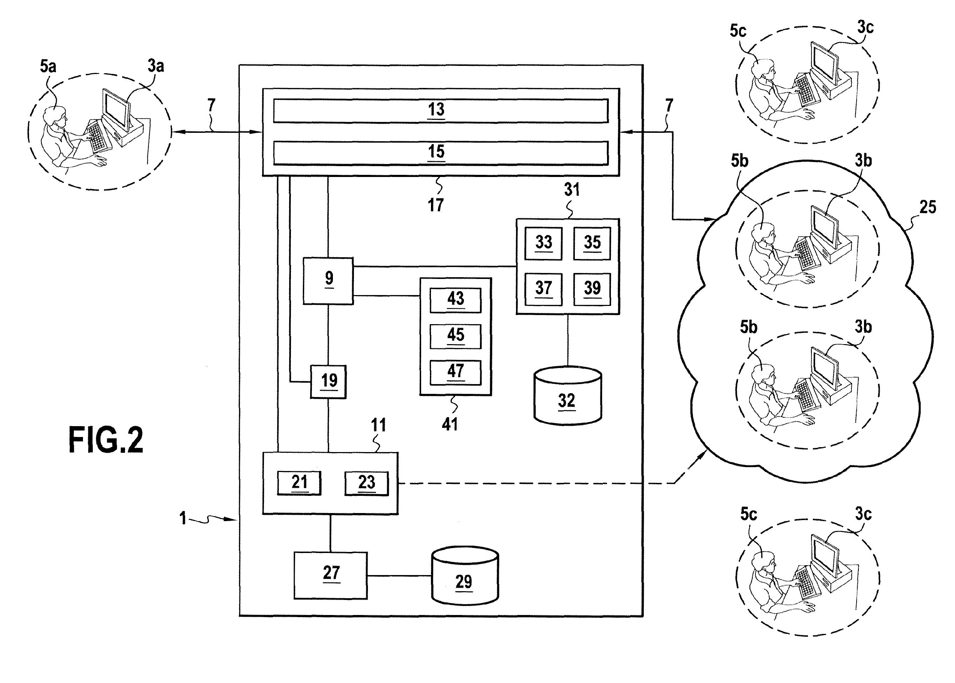

En effet, la figure 2 montre que le système de communication 1 peut comprendre des moyens d'édition 19 interposés par exemple entre les moyens de recherche 9 et les moyens de communication 11, pour permettre au demandeur 5a via son terminal 3a, de supprimer une partie des utilisateurs de la liste d'utilisateurs 5b générée par les moyens de recherche 9. Ainsi, le demandeur 5a peut décider de supprimer ou de garder des utilisateurs répondeurs selon par exemple, des critères géographiques, de disponibilité ou d'évaluation des utilisateurs répondeurs 5b.

En outre, les moyens d'édition 19 permettent au demandeur 5a de rajouter à la liste d'utilisateurs répondeurs 5b d'autres utilisateurs qu'il a lui-même identifiés. Les données de ces autres utilisateurs peuvent être issues des données stockées dans le terminal 3a du demandeur 5a ou dans un autre dispositif (non représenté). Le demandeur 5a peut rester ainsi entièrement propriétaire des critères retenus dans la requête qu'il effectue et peut sélectionner les destinataires ou receveurs de sa requête.

Plus particulièrement, les moyens de communication 11 peuvent comprendre des moyens de création 21 et des moyens de notification 23. Les moyens de création 21 sont destinés à créer un espace d'échange 25 spécifique à la requête du demandeur 5a. Par ailleurs, les moyens de notification 23 sont destinés à notifier aux utilisateurs répondeurs 5b, un message associé à la requête du demandeur 5a et à leur fournir un accès à cet espace d'échange 25.

Ainsi, le système de communication 1 permet de créer automatiquement avant d'envoyer la requête ou le message aux utilisateurs répondeurs 5b, un forum (espace d'échange 25) ayant pour titre la question posée par le demandeur 5a. Les utilisateurs répondeurs 5b peuvent accéder à ce forum 25 par un simple click sur un lien rajouté par exemple à la fin du message. Par conséquent, les utilisateurs répondeurs 5b peuvent facilement discuter, débattre ou échanger des données entre eux en relation avec la question posée par le demandeur 5a.

Le message associé à la requête est un message qui peut être envoyé par le demandeur 5a pour mieux expliciter sa requête. Ainsi, la requête peut être utilisée par le système de communication 1 pour sélectionner les utilisateurs répondeurs 5b potentiels et éventuellement, le message permet à ces utilisateurs répondeurs 5b d'avoir plus de précisions sur la requête pour mieux répondre à la question du demandeur 5a. De plus, le demandeur 5a peut spécifier le mode de diffusion de son message.

En effet, le demandeur 5a peut rédiger le message pour expliciter sa requête et peut éventuellement préciser le caractère d'urgence, de confidentialité, d'importance, ou tout autre paramètre susceptible d'influencer le mode de diffusion de sa requête. Par exemple, en cas de confidentialité, l'accès à l'espace d'échange 25 ou de discussion peut être limité uniquement aux utilisateurs répondeurs 5b choisis par le demandeur 5a.

On notera que le système de communication 1 peut recevoir la requête, le message ou les paramètres relatifs au mode de diffusion du message en provenance du demandeur 5a par l'intermédiaire des moyens de réception 15. Par ailleurs, la requête, le message, le lien de connexion à l'espace d'échange 25, et éventuellement les paramètres de diffusion du message peuvent être envoyées aux répondeurs 5b par l'intermédiaire des moyens d'émission 13 du système de communication 1.

Avantageusement, le système de communication 1 peut comprendre des moyens 27 de capitalisation reliés par exemple aux moyens de communication 11, pour permettre aux utilisateurs répondeurs 5b de sélectionner une meilleure réponse parmi les réponses qu'elles ont fournies. Cette meilleure réponse peut être enregistrée ou stockée dans une base de donnée de réponses 29 reliée aux moyens 27 de capitalisation pour éventuellement envoyer cette meilleure réponse à un autre demandeur posant une question ou formulant une requête similaire.

Par ailleurs, le système de communication 1 peut comporter des moyens de constitution de profils 31 qui forment en relation avec les moyens de recherche 9, un outil de recherche et d'élaboration de connaissances.

Les moyens de constitution de profils 31 permettent de constituer le profil d'un utilisateur 5b, 5c par un ensemble de données de profil qui peuvent être restreint à une série de mots clés ou labels (tags). Ces mots clés explicites ou implicites, servent de critères pour une mise en relation avec le ou les interlocuteurs ou utilisateurs pertinents. En effet, un mot clé ou label est une balise sémantique ou lexique qui peut définir un contenu. Par exemple, lorsqu'un utilisateur clique sur l'un des labels, l'ensemble des ressources contenant ce label apparaît.

Plus particulièrement, les moyens de constitution de profils 31 peuvent comporter des moyens d'extraction 33 pour extraire les mots clés ou les données de profil, et des moyens de rattachement ou de substitution 35 pour rajouter ou substituer les données de profil à un profil précédent de l'utilisateur. Ceci permet de créer de manière automatique un profil évolutif d'un utilisateur 5a, 5b en permettant de mettre à jour et d'enrichir son profil précédent. Ainsi, on peut choisir les utilisateurs répondeurs les plus appropriés pour répondre à la requête. Par ailleurs, les profils des utilisateurs 5a, 5b peuvent être enregistrés dans un moyen de stockage de profil 32.

Les données ou mots clés de profil peuvent provenir de plusieurs sources de données. Certaines données peuvent être directement collectées depuis un système d'information (non représenté) d'une entreprise ou de toute autre système ou serveur contenant les futurs utilisateurs du système de communication 1.

En effet, les moyens de constitution de profils 31 permettent de pré-provisionner (provisionning) les utilisateurs 5b, 5c du système de communication 1 en enregistrant dans le moyen de stockage de profil 32, des données issues du système d'information de l'entreprise. Ces données correspondent à des données sociodémographiques de l'utilisateur 5b, 5c comprenant nom, prénom, localisation, courrier électronique (email), téléphone, ou fonction de l'utilisateur. Si ces données ne sont pas accessibles, l'utilisateur 5b, 5c peut remplir les champs vacants et peut ajouter d'autres informations personnelles telles qu'un descriptif ou une photo.

Une autre source de données peut être déclarative. Ainsi, les données déclarées par l'utilisateur 5b, 5c peuvent comprendre le domaine fonctionnel de l'utilisateur, ses compétences, son centre d'intérêt, sa disponibilité, le mode préférentiel de réception du message ou de la requête (par exemple par SMS ou email), ou le mode de participation à l'échange collaboratif.

Une autre source de données peut être un partage de documents stockés sur les terminaux 3b, 3c des utilisateurs 5a, 5b ou au niveau d'un serveur (non représenté) dans l'espace public. Plus particulièrement, cette source correspond aux données extraites des documents que l'utilisateur 5b, 5c partage avec d'autres utilisateurs 5b, 5c.

En effet, pour compléter son profil, l'utilisateur 5b, 5c peut être invité à partager une série de fichiers ou documents (par exemple curriculum vitae, publications) avec d'autres utilisateurs. Ensuite, les moyens d'extraction 33 comprenant par exemple un moteur d'analyse sémantique (LSA ou Latent Semantic Analysis) peuvent extraire une liste de mots clés pour les attribuer à l'utilisateur 5b, 5c. L'extraction de mots clés peut être basé sur l'indexation de ces documents ainsi que les éventuels labels ou mots clés que les utilisateurs ont associé aux documents.

Encore, une autre source de données peut être des données extraites des profils de membres d'un groupe d'utilisateurs. En effet, l'utilisateur a la possibilité de constituer une ou plusieurs listes de contacts ou groupes de travail, d'affinités, d'exclusion ou d'autres types de groupes. Ensuite, les moyens d'extraction 33 peuvent extraire des mots clés récurrents chez les contacts de l'utilisateur 5b, 5c.

Une autre source de données peut être des données issues d'une activité de l'utilisateur 5b, 5c ou les échanges que cet utilisateur a réalisés avec d'autres utilisateurs 5b, 5c.

En effet, le volume d'informations échangé sur différents réseaux informatiques et les données publiées par les utilisateurs 5b, 5c permettent d'affiner le profil de l'utilisateur sans le solliciter. Ainsi, on peut enrichir, par l'activité de l'utilisateur, les mots clés attribués à ce dernier. Les moyens de constitutions de profil 31 permettent aux utilisateurs d'associer des mots clés par exemple aux éléments suivants: profil personnel (ou déclaratif), documents personnels ou partagés, discussions avec d'autres utilisateurs, profils attribués par d'autres utilisateurs.

Ainsi, lorsque l'utilisateur 5b, 5c pourvoit des mots clés à des documents, discussions ou d'autres utilisateurs, les moyens de constitutions de profil 31 attribuent ces mots clés à l'utilisateur 5b, 5c pour enrichir son profil. En effet, on peut formuler l'hypothèse que cet utilisateur connaît ou est sensibilisé aux mots clés qu'il emploie.

Ainsi, le profil de l'utilisateur 5b, 5c peut comporter des mots-clés pré-provisionnées collectées d'un système d'information ou déclarées lors de l'inscription de l'utilisateur, des méta mots-clés ou des mots clés connexes extraits de documents (en fonction de la récurrence), extraits des groupes de l'utilisateur (en fonction de la récurrence), ou extraits des participations de l'utilisateur 5b, 5c.

Avantageusement, les moyens de constitution de profils 31 comportent en outre des moyens de proposition 37 et des moyens de validation 39.

Les moyens de proposition 37 permettent de proposer à l'utilisateur 5b, 5c les données de profil ou mots clés extraits par les moyens d'extraction 33. Ainsi l'utilisateur 5b, 5c a l'occasion d'agir sur son profil en supprimant, en rajoutant, ou en modifiant des mots clés pour mieux adapter son profil. Les moyens de validation 39 permettent alors à l'utilisateur 5b, 5c de valider ces données de profil et éventuellement de les pondérer avant leur rattachement à son profil par les moyens de rattachement 35.

Avantageusement, et afin de mettre en avant les répondeurs 5b potentiels les plus pertinents en fonction de la requête effectuée par le demandeur 5a, le système de communication 1 comporte en outre un outil de classement par pertinence 41 en relation avec les moyens de recherche 9 et les moyens de constitution de profils 31.

Cet outil de classement par pertinence 41 a pour fonction d'organiser par pertinence les répondeurs 5b et comporte des moyens de collecte 43, des moyens d'organisation 45, et des moyens de choix 47 de répondeurs pertinents.

Les moyens de collecte 43 sont destinés à collecter des coefficients attribués à des filtres caractérisant chaque utilisateur 5b, 5c. Le coefficient attribué à au moins un de ces filtres est dépendant de la requête formée par le demandeur 5a.

Les moyens d'organisation 45 sont destinés à organiser les utilisateurs selon des classes de pertinence en fonction des coefficients attribués aux filtres de chaque utilisateur. Par exemple, la somme des coefficients attribués aux filtres d'un utilisateur fournit un nombre qui permet de quantifier la pertinence de cet utilisateur et par conséquent de le classer par rapport aux autres utilisateurs 5b, 5c.

Les moyens de choix 47 de répondeurs pertinents peuvent alors choisir la liste de répondeurs 5b la plus adaptée pour répondre à la requête selon les classes de pertinence.

Les filtres peuvent être choisis parmi plusieurs sources de filtres comportant un filtre de compétence, un filtre de relais, un filtre de recommandation, un filtre de réputation, et un filtre de disponibilité.

Le filtre de compétence d'un utilisateur 5b, 5c est lié à la requête et peut décrire la pertinence par mot clé. Ce filtre de compétence peut être mis en place par des mots clés définis personnellement par chaque utilisateur, des mots clés qui ont été attribués à l'utilisateur par d'autres utilisateurs 5b, 5c, et des mots clés définis par les thèmes auquel l'utilisateur a participé.

Le filtre de relais peut décrire si l'utilisateur 5b, 5c a transféré beaucoup de requêtes à d'autres utilisateurs. Ceci peut être mis en place en indiquant le nombre de requête transféré par l'utilisateur précédemment.

Le filtre de participation peut décrire si l'utilisateur a répondu aux requêtes en indiquant le nombre de ces requêtes.

Le filtre de recommandation peut décrire si l'utilisateur a reçu beaucoup de requêtes transmises par d'autres utilisateurs dans le passé. Ceci peut être mis en place en indiquant les transmissions reçues pondérées par la proximité des thèmes.

Le filtre de réputation peut décrire si les réponses de l'utilisateur ont été bien évaluées par les autres utilisateurs 5b, 5c. Ceci peut être mis en place en indiquant les cohérences des réponses pondérées par la proximité des thèmes.

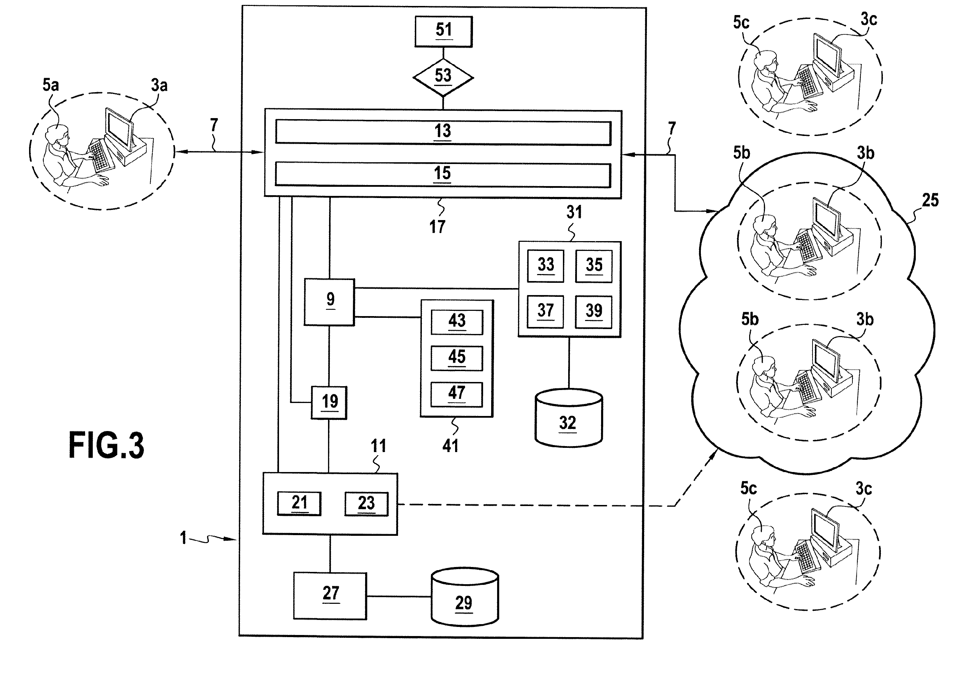

La figure 3 montre que le système de communication 1 peut également comporter un moyen ou un moteur de recherche 51 de documents pour rechercher un ou plusieurs documents pertinents en réponse à la requête du demandeur 5a. Le moteur de recherche 51 peut fonctionner suivant un mot complet, une sémantique, des associations, ou alors suivant des mots clés ou labels (tags) qui décrivent les documents rajoutés par les utilisateurs 5b, 5c lorsqu'ils déposent leurs fichiers au niveau de leurs terminaux 3b, 3c ou au niveau d'un serveur de stockage (non représenté).

Avantageusement, le système de communication 1 peut comporter un moyen de commutation 53 pour permettre au demandeur 5a de choisir entre rechercher des documents pertinents ou rechercher des utilisateurs répondeurs 5b susceptibles de répondre à sa requête.

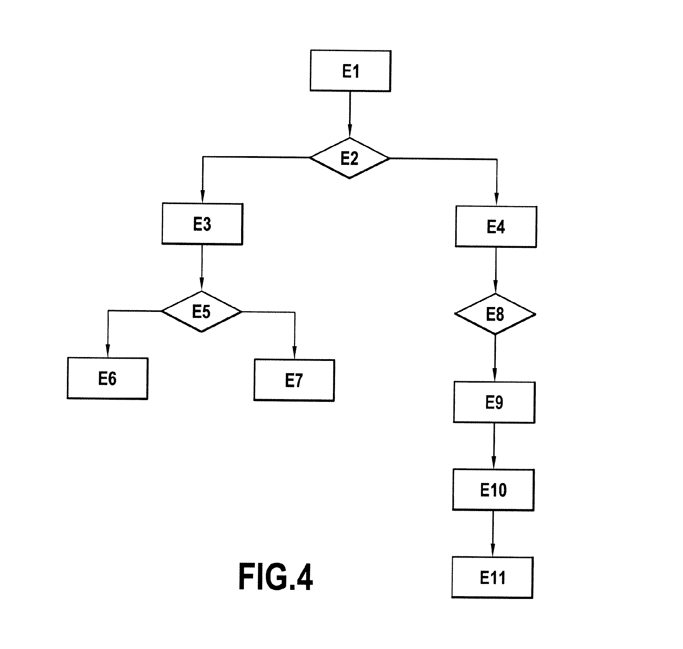

La figure 4 est un organigramme illustrant un exemple de recherche de connaissance selon l'invention.

Dans un premier temps (étape E1), le demandeur 5a saisit sa requête dans un navigateur web (ou une toute autre interface comme le mail ou le SMS) en tapant par exemple une phrase ou un ensemble de mots clefs qui permettent de définir son problème ou ce qu'il cherche.

A l'étape E2, le demandeur 5a a alors deux choix, soit il choisit de rechercher des documents pertinents (étape E3), soit il choisit de rechercher des personnes susceptibles de lui répondre (étape E4).

Si le demandeur 5a choisit une recherche sur des documents (étape E3), alors la recherche peut se faire sur la base de documents indexés et/ou à partir des mots clés. Par ailleurs, les documents peuvent être soit au niveau du terminal 3a du demandeur 5a (dans ce cas il peut choisir les documents ou les répertoires qu'il souhaite indexer), soit au niveau d'un serveur de stockage dans une zone public, soit enfin dans un référentiel commun qui peut être par exemple tous les documents de l'entreprise du demandeur 3a.

Ainsi, à l'étape E5, le demandeur a alors le choix du mode de recherche à partir de l'index et/ou de mots clés et le choix du lieu de recherche local (étape E6) ou public (étape E7).

En effet, à l'étape E6, la recherche se fait sur des documents sur le terminal 3a du demandeur 5a et à l'étape E7 la recherche se fait sur un serveur de stockage dans un espace public ou partagé.

En revanche, si le demandeur 5a choisit une recherche de personnes (étape E4), alors le système de communication 1 propose une liste de destinataires (ou d'utilisateurs répondeurs 5b) suivant la question posée et le profil des utilisateurs (composés d'un ensemble de mots clefs validés par l'utilisateur ou de manière automatique par le système de communication 1).

A l'étape E8, le demandeur 5a est libre de sélectionner la liste d'utilisateurs répondeurs 5b proposée par le système de communication 1. Il peut aussi rajouter d'autres répondeurs ou groupes qu'il s'est lui-même constitué ainsi qu'un ensemble de critères supplémentaires permettant d'affiner son choix (par exemple, localisation géographique, présence du répondeur en se basant sur la messagerie électronique, profil des répondeurs avec leurs taux de participation et éventuellement leurs évaluations).

A l'étape E9, le demandeur 5a rédige le message qu'il souhaite envoyer en précisant éventuellement des critères de diffusion (par exemple, importance ou confidentialité du message).

A l'étape E10, afin que les utilisateurs répondeurs 5b puissent échanger des données, le système de communication 1 crée automatiquement avant d'envoyer le message, un forum ou espace d'échange 25 (par exemple un site Wiki) ayant pour titre la question posée, accessibles qu'aux utilisateurs répondeurs 5b destinataires du message. Le lien peut être ajouté à la fin du message afin que le répondeur puisse accéder au forum.

A l'étape E11, la connaissance est capitalisée ou validée sous une forme d'espace d'édition collaboratif de type site Wiki.

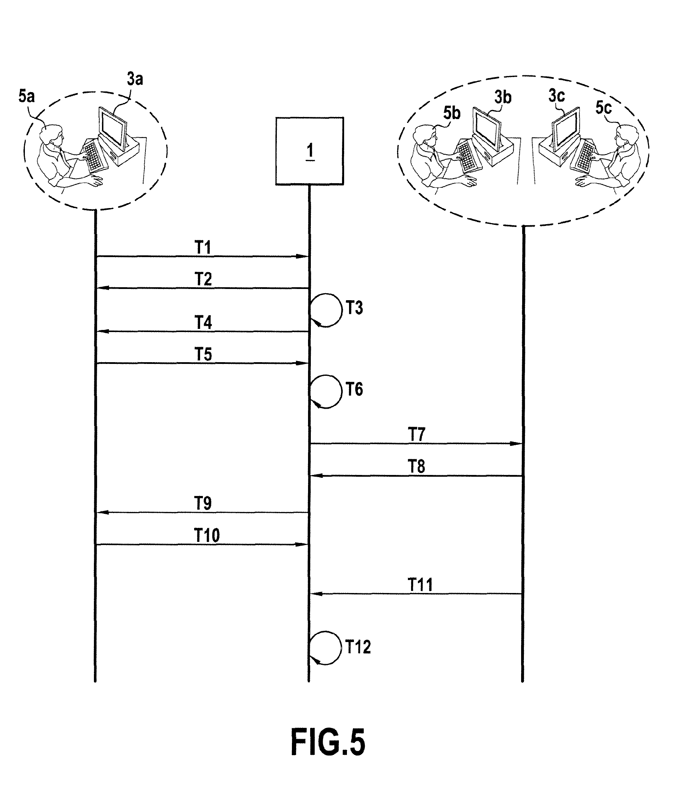

La figure 5 est un diagramme illustrant un exemple particulier d'un enchaînement de tâches pour la recherche de connaissance.

A la tâche T1, le demandeur 5a pose une question au système de communication 1. Cette question ou requête peut être émise en format IHM Java.

A la tâche T2, le système de communication 1 répond au demandeur 5a en proposant des documents (personnels, ou extraits des groupes ou d'une communauté) ou des discussions (extraits des groupes ou d'une communauté d'utilisateurs).

A la tâche T3, le système de communication 1 détermine le ou les meilleurs utilisateurs répondeurs 5b. En effet, les moyens de recherche 9 en liaison avec les moyens de constitution de profils 31 peuvent interroger l'outil de classement par pertinence 41 pour déterminer le ou les meilleurs utilisateurs répondeurs 5b par rapport à la requête du demandeur 5a.

A la tâche T4, le système de communication 1 (plus particulièrement les moyens de recherche 9 en liaison avec les moyens de constitution de profils 31), suggère une liste de répondeurs 5b aptes à répondre à la question du demandeur 5a.

A la tâche T5, le demandeur 5a sélectionne certains utilisateurs et leur diffuse un message.

A la tâche T6, le système de communication 1 crée une discussion de type Wiki.

A la tâche T7, le système de communication 1 alerte les utilisateurs répondeurs 5b sélectionnés par le demandeur 5a qu'un message leur est destiné.

A la tâche T8, les répondeurs 5b (destinataires de ce message) répondent au système de communication 1. L'ensemble des réponses est accumulé sur le Wiki.

A la tâche T9, le système de communication 1 transmet les différentes réponses au demandeur 5a.

A la tâche T10, le demandeur 5a indique s'il est satisfait des réponses qu'il a obtenues en votant pour la meilleure d'entre elles.

A la tâche T11, les utilisateurs répondeurs 5b votent également pour la meilleure réponse.

Finalement, à la tâche T12, le système de communication 1 capitalise la meilleure réponse.

L'invention vise aussi un programme d'ordinateur téléchargeable depuis un réseau de communication comprenant des instructions de codes de programme pour l'exécution des étapes du procédé de communication selon l'invention lorsqu'il est exécuté sur un serveur ou ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Système de communication (1) pour un ensemble d'utilisateurs, ledit système étant conçu pour fournir au moins une réponse à une requête d'un utilisateur demandeur (5a), **caractérisé en ce qu'**il comporte :
- des moyens de recherche (9) pour générer une liste d'utilisateurs (5b) en sélectionnant dans ledit ensemble d'utilisateurs (5b, 5c), en fonction de profils desdits utilisateurs, des utilisateurs susceptibles de répondre à ladite requête, lesdits profils étant identifiés dans ladite requête,
- des moyens de communication (11) pour permettre un échange entre lesdits utilisateurs de ladite liste (5b) au sujet de ladite requête, et
- des moyens d'émission (13) pour envoyer à l'utilisateur demandeur ladite au moins une réponse issue dudit échange.

2. Système selon la revendication 1, **caractérisé en ce qu'**il comporte :
- des moyens (27) pour permettre auxdits utilisateurs de ladite liste d'utilisateurs de sélectionner une meilleure réponse parmi ladite au moins une réponse, et
- une base de donnée (29) pour enregistrer ladite meilleure réponse.

3. Système selon la revendication 1 ou 2, **caractérisé en ce qu'**il comporte des moyens d'édition (19) pour permettre audit utilisateur demandeur (5a) de supprimer une partie des utilisateurs de ladite liste d'utilisateurs (5b) générée par lesdits moyens de recherche (9).

4. Système selon la revendication 3, **caractérisé en ce que** lesdits moyens d'édition (19) sont conçus en outre pour permettre audit utilisateur demandeur de rajouter d'autres utilisateurs à ladite liste d'utilisateurs.

5. Système selon l'une quelconque des revendications 1 à 4, **caractérisé en ce que** lesdits moyens de communication (11) comportent :
- des moyens de création (21) pour créer un espace d'échange (25) spécifique à ladite requête,
- des moyens de notification (23) pour notifier aux utilisateurs de ladite liste un message associé à ladite requête et
- des moyens (23) pour fournir aux utilisateurs de ladite liste un accès audit espace d'échange.

6. Système selon la revendication 4, **caractérisé en ce qu'**il comporte des moyens de réception (15) pour recevoir en provenance d'un terminal de l'utilisateur demandeur de ladite requête, ledit message associé à ladite requête, et/ou des paramètres relatifs à un mode de diffusion dudit message.

7. Système selon l'une quelconque des revendications 1 à 6, **caractérisé en ce qu'**il comporte des moyens de constitution de profils (31) pour constituer le profil d'un utilisateur (5b, 5c) au moyen d'un ensemble de données de profil extraites d'au moins une source de données parmi les sources suivantes : données collectées depuis un système d'information, données déclarées par ledit utilisateur, données issues d'une activité dudit utilisateur, données extraites des profils des membres d'un groupe d'utilisateurs, données extraites des documents que ledit utilisateur partage avec d'autres utilisateurs, et données extraites des échanges que ledit utilisateur a réalisé avec d'autres utilisateurs.

8. Système selon la revendication 7, **caractérisé en ce que** les moyens de constitution de profils (31) comporte :
- des moyens de proposition (37) pour proposer audit utilisateur lesdites données de profil extraites, et
- des moyens de validation (31) pour permettre audit utilisateur de valider lesdites données de profil et/ou de pondérer lesdites données de profil.

9. Système selon l'une quelconque des revendications 1 à 9, **caractérisé en ce qu'**il comporte en outre :
- des moyens de collecte (43) pour collecter des coefficients attribués à des filtres caractérisant chaque utilisateur, le coefficient attribué à au moins un desdits filtres étant dépendant de la requête,
- des moyens d'organisation (45) pour organiser les utilisateurs selon des classes de pertinence en fonction des coefficients attribués auxdits filtres de chaque utilisateur, et
- des moyens de choix (39) de répondeurs pertinents pour choisir la liste de répondeurs la plus adaptée pour répondre à ladite requête selon lesdites classes de pertinence.

10. Système selon l'une quelconque des revendications 1 à 9, **caractérisé en ce qu'**il comporte en outre un moyen de recherche (51) de documents pour rechercher au moins un document pertinent en réponse à ladite requête.

11. Système selon la revendication 10, **caractérisé en ce qu'**il comporte en outre un moyen de commutation (53) pour permettre au demandeur de choisir entre rechercher des documents pertinents ou rechercher des répondeurs susceptibles de répondre à sa requête.

12. Procédé de communication pour un ensemble d'utilisateurs, ledit procédé étant conçu pour fournir au moins une réponse à une requête d'un utilisateur demandeur (5a), **caractérisé en ce qu'**il comporte les étapes suivantes :
- génération d'une liste d'utilisateurs (5b) en sélectionnant dans ledit ensemble d'utilisateurs (5b, 5c), en fonction de profils desdits utilisateurs, des utilisateurs susceptibles de répondre à ladite requête, lesdits profils étant identifiés dans ladite requête,
- communication entre lesdits utilisateurs de ladite liste (5b) pour permettre un échange entre lesdits utilisateurs de ladite liste (5b) au sujet de ladite requête, et
- envoie à l'utilisateur demandeur ladite au moins une réponse issue dudit échange.

13. Procédé selon la revendication 12, **caractérisé en ce qu'**il comporte en outre les étapes suivantes :
- sélection par lesdits utilisateurs de ladite liste (5b) d'une meilleure réponse parmi ladite au moins une réponse, et
- enregistrement de ladite meilleure réponse.

14. Procédé selon la revendication 12 ou 13, **caractérisé en ce que** ladite communication entre lesdits utilisateurs de ladite liste (5b) comporte les étapes suivantes :
- création d'un espace d'échange (25) spécifique à ladite requête, et
- notification auxdits répondeurs, d'un message associé à ladite requête et d'un accès audit espace d'échange.

15. Procédé selon l'une quelconque des revendications 12 à 14, **caractérisé en ce qu'**il comporte une étape de constitution de profils pour constituer le profil d'un utilisateur (5b, 5c) par un ensemble de données de profil provenant d'au moins une source de données parmi les sources suivantes : données collectées depuis un système d'information, données déclarées par ledit utilisateur, données issues d'une activité dudit utilisateur, données extraites des profils des membres d'un groupe d'utilisateurs, données extraites des documents que ledit utilisateur partage avec d'autres utilisateurs, et données extraites des échanges que ledit utilisateur a réalisé avec d'autres utilisateurs.

16. Procédé selon l'une quelconque des revendication 12 à 15, **caractérisé en ce qu'**il comporte en outre les étapes suivantes :
- collecte des coefficients attribués à des filtres caractérisant chaque utilisateur, le coefficient attribué à au moins un desdits filtres étant dépendant de la requête,
- organisation des utilisateurs selon des classes de pertinence en fonction des coefficients attribués auxdits filtres de chaque utilisateur, et
- choix de la liste de répondeurs la plus adaptée pour répondre à ladite requête selon lesdites classes de pertinence.

17. Programme d'ordinateur téléchargeable depuis un réseau de communication et/ou stocké sur un support lisible par ordinateur et/ou exécutable par un microprocesseur, **caractérisé en ce qu'**il comprend des instructions de codes de programme pour l'exécution des étapes du procédé de communication selon au moins l'une des revendications 12 à 16, lorsqu'il est exécuté sur un ordinateur.
